# EUROPEAN PATENT SPECIFICATION

(11) **EP 1 892 165 B1**
(45) Date of publication and mention of the grant of the patent: **18.03.2009**
(21) Application number: 07110216.4
(22) Date of filing: 13.06.2007
(51) Int. Cl.: B60T 8/32

(54) **Motorcycle**
Motorrad
Motocyclette

(30) Priority: 22.08.2006 JP 2006225735
(43) Date of publication of application: 27.02.2008
(73) Proprietor: HONDA MOTOR CO., LTD., Tokyo 107-8556 (JP)
(72) Inventor: Kobayakawa, Takashi, Saitama 351-0193 (JP); Arai, Michito, Saitama 351-0193 (JP)
(74) Representative: Rupp, Christian

(56) References cited:
- JP-A- 2001 165 949
- JP-A- 2001 301 675

## Description

The present invention relates to a motorcycle having a vehicle speed sensor mounted on a swing arm for detecting a wheel speed.

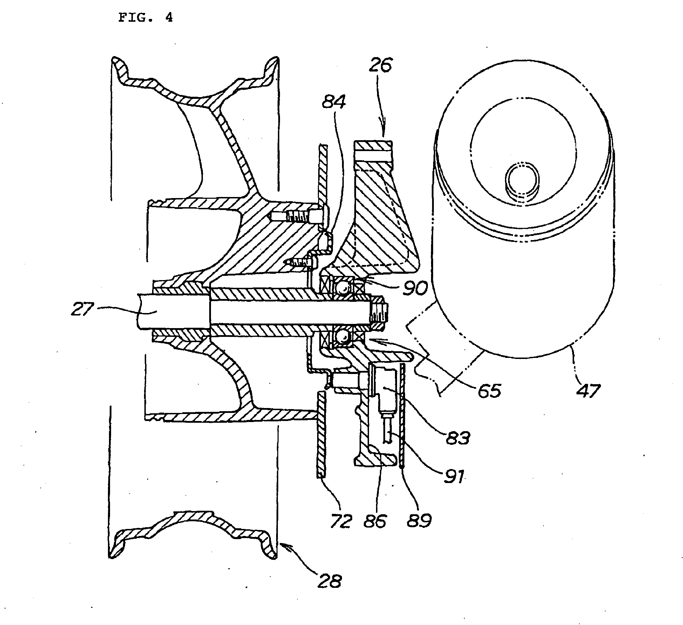

Conventionally known is a motorcycle having a body frame, a swing arm pivotably connected to the body frame for rotatably supporting a wheel, and a vehicle speed sensor mounted on the swing arm for detecting a wheel speed (see Patent Document 1, for example).
Japanese Patent Laid-open No. 2001-165949 (FIG. 4)

FIG. 4 in Patent Document 1 illustrates a basic configuration in the prior art. Referring to FIG. 4 in Patent Document 1, a rear portion of a motorcycle 10 (reference numerals used in the description of the prior art are those shown in FIG. 4 in Patent Document 1) includes a swing arm 35 extending rearward from a rear portion of a swing unit 16 for rotatably supporting a rear wheel 17, a muffler 46 provided on one side of the swing arm 35 and mounted thereto so as to be vertically moved together, a disk-shaped pulser ring (center rotor) 52 mounted on the rear wheel 17, and a pulser count sensor (vehicle speed sensor) 60 mounted on the swing arm 35 for detecting a wheel speed in cooperation with the center rotor 52. The wheel speed of the rear wheel 17 is detected by the vehicle speed sensor 60.

In this conventional structure, the muffler 46 is provided on the right side of the swing arm 35 and the vehicle speed sensor 60 is located so as to overlap the muffler 46 as viewed in left side elevation of the vehicle. In other words, the vehicle speed sensor 60 is located close to the muffler 46. Accordingly, there is a case that the vehicle speed sensor 60 may be influenced by the heat dissipated from the muffler 46.

As a measure for eliminating the influence of the heat dissipated from the muffler 46, it is considered to locate the muffler 46 outside of the swing arm 35 in the lateral direction of the vehicle, thereby increasing the distance between the vehicle speed sensor 60 and the muffler 46. However, in the case that the muffler 46 is located outside of the swing arm 35 in the lateral direction of the vehicle, the width of the vehicle is increased to cause a problem such that a bank angle is reduced.

As another measure for eliminating the influence of the heat dissipated from the muffler 46, it is considered to use a vehicle speed sensor having heat resistance specifications. However, in the case that a vehicle speed sensor having heat resistance specifications is used, there arises a problem such that the cost of the vehicle speed sensor is increased.

It is accordingly an object of the present invention to provide a motorcycle in which the width of the vehicle can be suppressed and the influence of the heat dissipated from a muffler upon a vehicle speed sensor can be suppressed.
This object is solved by a motorcycle having the features of claim 1. Preferred embodiments of the invention are defined in the dependent claims.

In accordance with the invention as defined in claim 1, there is provided a motorcycle including a body frame, a swing arm pivotably connected to the body frame for rotatably supporting a wheel, a muffler provided on one side of the swing arm and mounted thereto so as to be vertically moved together, a center rotor mounted on the wheel so as to be rotated together, and a vehicle speed sensor mounted on the swing arm for detecting a wheel speed in cooperation with the center rotor, wherein the swing arm has a recess formed so as not to overlap the muffler as viewed in side elevation of the motorcycle, and the vehicle speed sensor is provided in the recess. The swing arm has a boss portion for mounting the muffler, and the recess extends along the lower contour of the boss portion.

In accordance with the invention as defined in claim 2, the vehicle speed sensor is located below the muffler.

In accordance with the invention as defined in claim 3, the recess extends from near an axle supporting portion of the swing arm for supporting an axle of the wheel to a substantially central portion of the swing arm.

In accordance with the invention as defined in claim 4, a cover member for covering the recess is mounted on the swing arm.

In accordance with the invention as defined in claim 5, a sensor cable extends from the vehicle speed sensor along the swing arm, and a part of the sensor cable is covered with the cover member.

In accordance with the invention as defined in claim 6, the swing arm has a first tapped portion for mounting the vehicle speed sensor, a second tapped portion for mounting the sensor cable, and a third tapped portion for mounting the cover member in the vicinity of the first tapped portion or the second tapped portion.

According to the invention as defined in claim 1, the swing arm has the recess formed so as not to overlap the muffler as viewed in side elevation of the vehicle, and the vehicle speed sensor is provided in the recess. Accordingly, the width of the vehicle can be suppressed, and the vehicle speed sensor can be spaced apart from the muffler. Since the vehicle speed sensor is spaced apart from the muffler, the influence of the heat dissipated from the muffler upon the vehicle speed sensor can be suppressed.

Further, since the vehicle speed sensor is provided in the recess, foreign matter such as mud and sand hardly comes into direct contact with the vehicle speed sensor, so that the vehicle speed sensor can be protected from foreign matter.
Moreover, since the influence of the heat dissipated from the muffler upon the vehicle speed sensor can be suppressed, the vehicle speed sensor is not required to have heat resistance specifications, so that an increase in cost of the vehicle speed sensor can be avoided.

Further, the recess is formed so as to extend along the lower contour of the boss portion for mounting the muffler. In other words, the recess is formed at a portion having a relatively high strength in the periphery of the boss portion for mounting the muffler. Accordingly, a reduction in strength of the swing arm due to the formation of the recess can be minimized, and a dead space at a lower portion of the swing arm can be effectively utilized.

According to the invention as defined in claim 2, the vehicle speed sensor is located below the muffler. The air around the muffler is heated by the muffler to rise because of its weight reduction. Since the vehicle speed sensor is located below the muffler, the air heated by the muffler hardly comes into contact with the vehicle speed sensor.
Accordingly, the influence of the heat dissipated from the muffler upon the vehicle speed sensor can be further suppressed.

According to the invention as defined in claim 3, the recess extends from near the axle supporting portion for supporting the axle of the wheel to the substantially central portion of the swing arm. Accordingly, not only the vehicle speed sensor, but also a part of the sensor cable extending frontward from the vehicle speed sensor along the swing arm can be accommodated in the recess. Thus, a part of the sensor cable is accommodated in the recess, so that the sensor cable can be protected from foreign matter and also protected from the heat dissipated from the muffler.

According to the invention as defined in claim 4, the cover member for covering the recess is mounted on the swing arm. Accordingly, the vehicle speed sensor provided in the recess can be protected from foreign matter by the cover member. Further, the influence of the heat dissipated from the muffler upon the vehicle speed sensor can be further suppressed.

According to the invention as defined in claim 5, the sensor cable extends along the swing arm, and a part of the sensor cable is covered with the cover member. Accordingly, a part of the sensor cable can be shielded by the cover member, so that the sensor cable can be further protected from foreign matter and the influence of the heat dissipated from the muffler upon the sensor cable can be further suppressed.

According to the invention as defined in claim 6, the swing arm has the first tapped portion for mounting the vehicle speed sensor, the second tapped portion for mounting the sensor cable, and the third tapped portion for mounting the cover member in the vicinity of the first tapped portion or the second tapped portion. Accordingly, a mold for forming the swing arm can be easily designed. Further, in molding the swing arm, the fluidity of molten metal between the first tapped portion and the third tapped portion can be improved, and the fluidity of molten metal between the second tapped portion and the third tapped portion can also be improved. As a result, the molding quality of the swing arm can be easily ensured. Also in working the swing arm, the amount of movement of a workpiece or a tool can be reduced to thereby improve a working efficiency.
FIG. 1 is a right side view of a motorcycle provided with a vehicle speed sensor according to a preferred embodiment of the present invention.
FIG. 2 is a perspective view for illustrating a swing arm and its peripheral portion in the motorcycle.
FIG. 3 is a side view of an essential part of the motorcycle.
FIG. 4 is a cross section taken along the line 4-4 in FIG. 3.
FIG. 5 is a sectional view for illustrating a mounted relation between the swing arm and a muffler.
FIG. 6 is a cross section taken along the line 6-6 in FIG. 3.
FIG. 7 is a cross section taken along the line 7-7 in FIG. 3.
FIG. 8 is a cross section taken along the line 8-8 in FIG. 3.

A preferred embodiment of the present invention will now be described with reference to the attached drawings. The orientation of each drawing is the same as that of the reference numerals included therein.

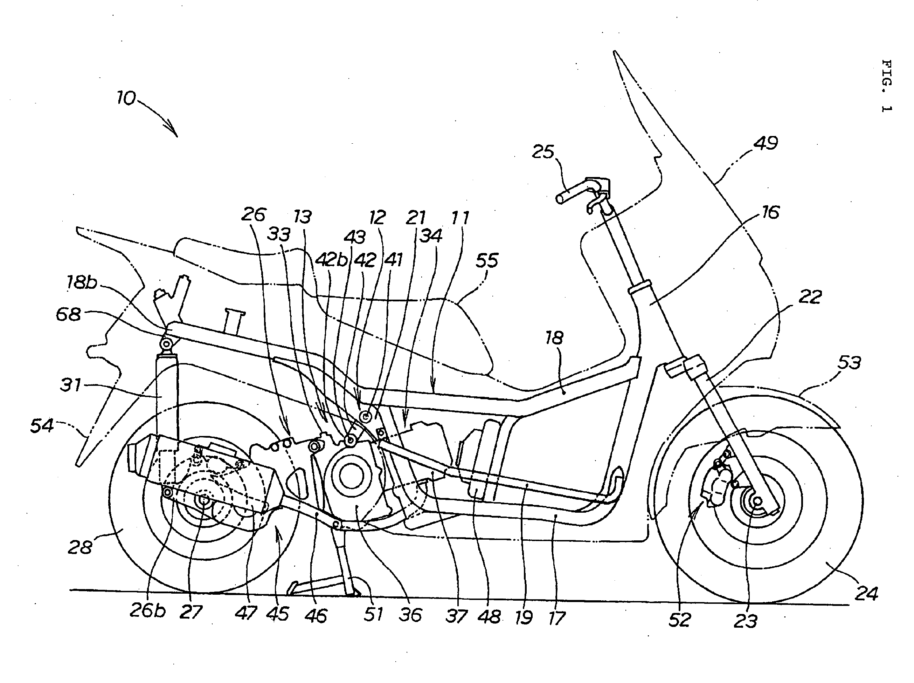

FIG. 1 is a right side view of a motorcycle 10 according to a preferred embodiment of the present invention. The motorcycle 10 is a so-called unit swing type vehicle having a power unit 13 pivotably mounted through a link mechanism 12 to a rear portion of a body frame 11.

The body frame 11 is composed mainly of a head pipe 16 forming a front end, an under frame 17 having a front portion extending obliquely downward from the head pipe 16, an intermediate portion extending substantially horizontally from the front portion, and a rear portion extending obliquely upward from the intermediate portion, an upper frame 18 extending rearward from the front end of the under frame 17, a subframe 19 mounted to the front and rear portions of the under frame 17 for supporting rider steps or the like, and an engine mounting frame 21 provided near a connected portion between the under frame 17 and the upper frame 18 for mounting an engine 34.

A front fork 22 is steerably mounted to the head pipe 16, and a front axle 23 is rotatably supported to the lower ends of the front fork 22. A front wheel 24 is fixedly mounted to the front axle 23, and a steering handle 25 is mounted to the upper end of the front fork 22.

A swing arm 26 extends from the rear end of the power unit 13, and a rear axle 27 is rotatably supported to the swing arm 26. A rear wheel 28 is fixedly mounted to the rear axle 27, and a rear cushion unit 31 is connected between a rear end portion 26b of the swing arm 26 and a rear end portion 18b of the upper frame 18.

The power unit 13 is composed of the engine 34 and a continuously variable transmission 33 joined together. The power unit 13 has a transmission case 36 and a cylinder portion 37 extending obliquely upward from the front end of the transmission case 36. Power of the engine 34 is transmitted through the continuously variable transmission 33 to the rear wheel 28.

The link mechanism 12 interposed between the power unit 13 and the engine mounting frame 21 includes a support shaft 41 mounted to the engine mounting frame 21, a link member 42 extending obliquely downward from the support shaft 41, and a pivot shaft 43 provided at a lower end portion 42b of the link member 42.

An exhaust device 45 is composed of an exhaust pipe 46 connected to the engine 34 and extending rearward therefrom and a muffler 47 connected to the exhaust pipe 46 and extending rearward therefrom.
Although not shown, an intake device, a fuel tank, and a fuel pipe are connected to the cylinder portion 37.

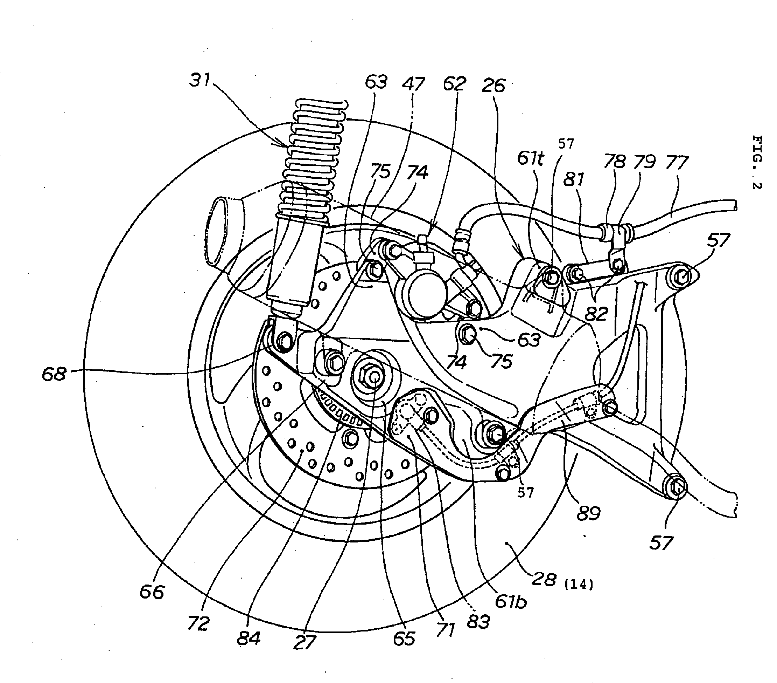

The motorcycle 10 further includes a radiator unit 48, cowl member 49, stand 51, front brake unit 52, front fender 53, rear fender 54, and rider seat 55.
The swing arm 26 for supporting the rear wheel 28 will now be described in detail with reference to FIGS. 2 to 8.

FIG. 2 is a perspective view for illustrating the swing arm 26 and its peripheral portion in the motorcycle 10. In FIG. 2, the muffler 47 located on the right side of the swing arm 26 is shown by a phantom line.
The swing arm 26 is mounted to a rear end portion of the power unit 13 (see FIG. 1) by means of two tightening bolts 57. Accordingly, the swing arm 26 for supporting the rear wheel 28 is vertically swingable together with the power unit 13.

The swing arm 26 includes upper and lower boss portions 61t and 61b for supporting the muffler 47, a rear brake unit mounting portion 63 formed on the rear side of the upper and lower boss portions 61t and 61b for mounting a rear brake unit 62, an axle supporting portion 65 formed on the lower side of the rear brake unit mounting portion 63 for supporting the rear axle 27, a rear boss portion 66 formed on the rear side of the axle supporting portion 65 for supporting the muffler 47, a rear cushion unit mounting portion 68 formed on the rear side of the rear boss portion 66 for mounting the rear cushion unit 31, and a vehicle speed sensor mounting portion 71 formed on the front side of the axle supporting portion 65 for mounting a vehicle speed sensor 83.

The rear brake unit 62 functions to stop the rotation of the rear wheel 28 as needed in cooperation with a brake disc 72 mounted on a hub of the rear wheel 28. The rear brake unit 62 is firmly mounted through two stays 73 and two tightening members 75 to the swing arm 26.

A brake pipe 77 extends frontward from the rear brake unit 62. A pipe stay 79 is mounted through a bushing 78 to the brake pipe 77. The pipe stay 79 is fixed to a lug 81 formed at a front portion of the swing arm 26 by means of a small bolt 82.

A center rotor 84 for obtaining wheel speed information in cooperation with the vehicle speed sensor 83 is provided between the rear wheel 28 and the swing arm 26 and mounted on the rear wheel 28 so as to be rotated together.

Thus, the motorcycle 10 includes the body frame 11, the swing arm 26 pivotably connected to the body frame 11 for rotatably supporting the rear wheel 28 as a wheel 14, the muffler 47 provided on the right side of the swing arm 26 and mounted thereto so as to be vertically moved together, the center rotor 84 mounted on the rear wheel 28 as the wheel 14 so as to be rotated together, and the vehicle speed sensor 83 mounted on the swing arm 26 for detecting a wheel speed in cooperation with the center rotor 84.

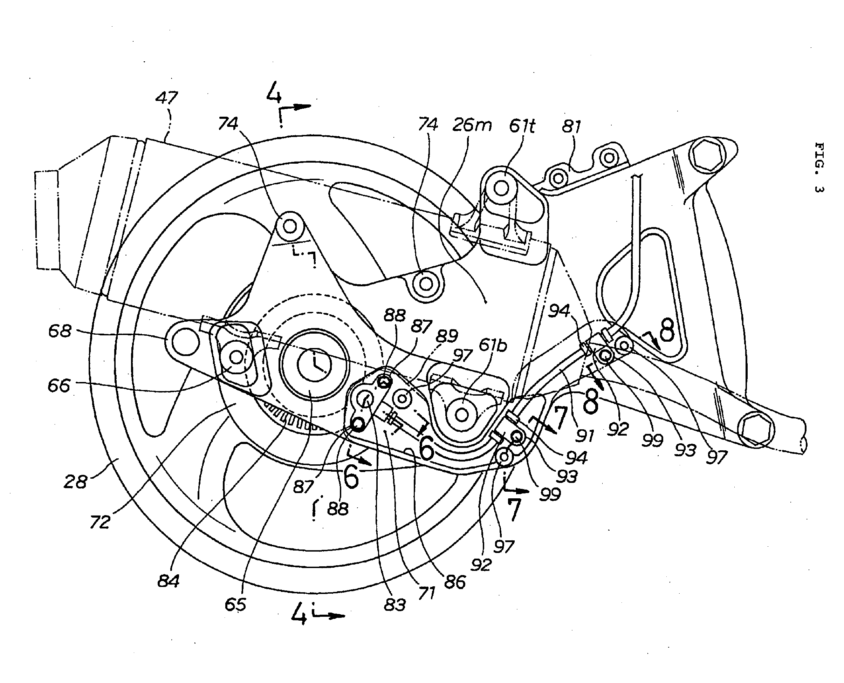

FIG. 3 is a side view of an essential part of the motorcycle 10, and FIG. 4 is a cross section taken along the line 4-4 in FIG. 3. The vehicle speed sensor mounting portion 71 and its peripheral portion will now be described in detail with reference to FIGS. 3 and 4.

The swing arm 26 is formed with a recess 86 on the front side of the axle supporting portion 65. The vehicle speed sensor mounting portion 71 is formed in this recess 86. In the vehicle speed sensor mounting portion 71, the vehicle speed sensor 83 is mounted on two first tapped portions 87 as screw mounting portions by means of two screws 88. The recess 86 is covered with a cover member 89 mounted on the swing arm 26. In other words, the vehicle speed sensor 83 and a part of a sensor cable 91 extending from the vehicle speed sensor 83 are provided in the recess 86 and covered with the cover member 89. As viewed in side elevation of the vehicle, the vehicle speed sensor 83 is positioned so as not to overlap the muffler 47.

The sensor cable 91 extends frontward from the vehicle speed sensor 83 along the swing arm 26. The sensor cable 91 is mounted through two stay members 92 to two second tapped portions 93 as screw mounting portions formed on the swing arm 26. Reference numeral 94 denotes a shock absorbing member interposed between each stay member 92 and the sensor cable 91.

The vehicle speed sensor 83 is located below the muffler 47. The air around the muffler 47 is heated by the muffler 47 to rise because of its weight reduction. Since the vehicle speed sensor 83 is located below the muffler 47, the air heated by the muffler 47 hardly comes into contact with the vehicle speed sensor 83. Accordingly, the influence of the heat dissipated from the muffler 47 upon the vehicle speed sensor 83 can be suppressed.

The cover member 89 for covering the recess 86 is mounted on the swing arm 26. Accordingly, the vehicle speed sensor 83 provided in the recess 86 can be protected from foreign matter by the cover member 89. Further, the influence of the heat dissipated from the muffler 47 upon the vehicle speed sensor 83 can be further suppressed. In FIG. 4, reference numeral 90 denotes a bearing portion for rotatably supporting the rear axle 27.

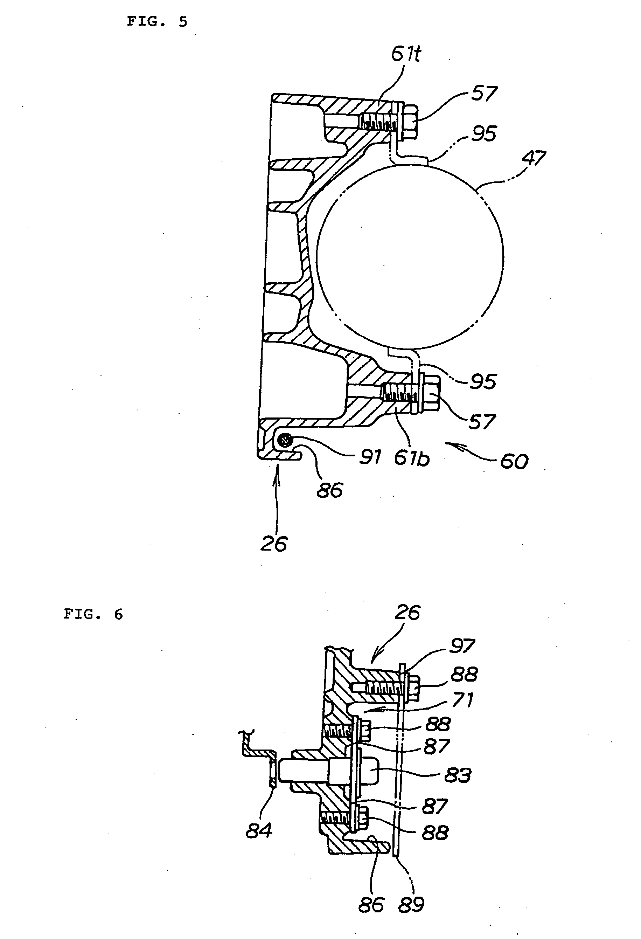

FIG. 5 is a sectional view for illustrating a mounted relation between the swing arm 26 and the muffler 47. The upper and lower boss portions 61t and 61b are formed at upper and lower central portions of the swing arm 26, and the muffler 47 is mounted to the upper and lower boss portions 61t and 61b. More specifically, the muffler 47 is provided with two stays 95, and these two stays 95 are mounted to the upper and lower boss portions 61t and 61b by means of two tightening bolts 57.

A part of the recess 86 extends below the lower boss portion 61b, and a part of the sensor cable 91 is accommodated in this part of the recess 86.
The recess 86 is formed at a portion having a relatively high strength in the periphery of the lower boss portion 61b as a boss portion 60 for mounting the muffler 47. Accordingly, a reduction in strength of the swing arm 26 due to the formation of the recess 86 can be minimized, and a dead space at a lower portion of the swing arm 26 can be effectively utilized.

Referring to FIGS. 3 to 5, the swing arm 26 has the recess 86 formed so as not to overlap the muffler 47 as viewed in side elevation of the vehicle, and the vehicle speed sensor 83 is provided in the recess 86.
Further, the swing arm 26 has the lower boss portion 61b as the boss portion 60 for mounting the muffler 47, and the recess 86 is formed so as to extend along the lower contour of the lower boss portion 61b.

As mentioned above, the recess 86 is formed so as to extend along the lower contour of the lower boss portion 61b as the boss portion 60 for mounting the muffler 47. In other words, the recess 86 is formed at a portion having a relatively high strength in the periphery of the lower boss portion 61b as the boss portion 60 for mounting the muffler 47. Accordingly, a reduction in strength of the swing arm 26 due to the formation of the recess 86 can be minimized, and a dead space at a lower portion of the swing arm 26 can be effectively utilized.

The recess 86 extends from near the axle supporting portion 65 for supporting the rear axle 27 of the rear wheel 28 to a substantially central portion 26m of the swing arm 26.
With this configuration, not only the vehicle speed sensor 83, but also a part of the sensor cable 91 extending frontward from the vehicle speed sensor 83 along the swing arm 26 can be accommodated in the recess 86. Thus, a part of the sensor cable 91 is accommodated in the recess 86, so that the sensor cable 91 can be protected from foreign matter and also protected from the heat dissipated from the muffler 47.

Further, the sensor cable 91 extends along the swing arm 26, and a part of the sensor cable 91 accommodated in the recess 86 is covered with the cover member 89. Accordingly, a part of the sensor cable 91 can be shielded by the cover member 89, so that the sensor cable 91 can be further protected from foreign matter and the influence of the heat dissipated from the muffler 47 upon the sensor cable 91 can be further suppressed.

FIG. 6 is a cross section taken along the line 6-6 in FIG. 3. As shown in FIG. 6, the recess 86 is formed on the outer side surface (the right side surface) of the swing arm 26, and the vehicle speed sensor mounting portion 71 is formed on the bottom surface of the recess 86. The vehicle speed sensor 83 is mounted on the vehicle speed sensor mounting portion 71 by means of two screws 88.
The vehicle speed sensor mounting portion 71 has two first tapped portions 87 as screw mounting portions for mounting the two screws 88. Further, a third tapped portion 97 for mounting the cover member 89 to the swing arm 26 is formed on the bottom surface of the recess 86 in the vicinity of the first tapped portions 87.

The vehicle speed sensor 83 is set on the first tapped portions 87 and fastened thereto by means of the two screws 88. Further, the cover member 89 is set on the third tapped portion 97 and fastened thereto by means of another screw 88.

Thus, the swing arm 26 has the first tapped portions 87 for mounting the vehicle speed sensor 83 and the third tapped portion 97 for mounting the cover member 89 in the vicinity of the first tapped portions 87.

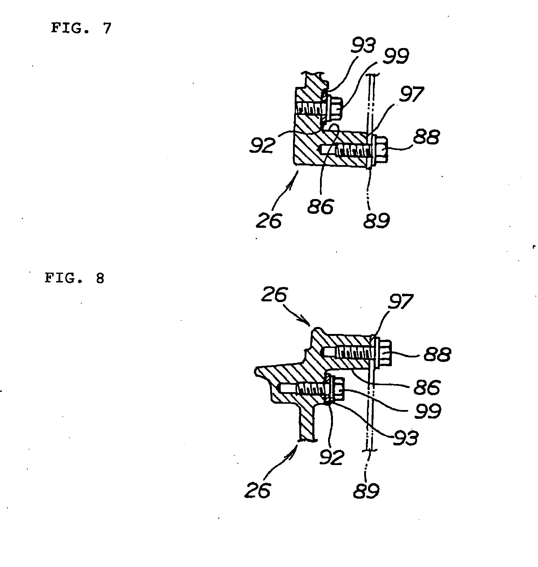

FIG. 7 is a cross section taken along the line 7-7 in FIG. 3. As shown in FIG. 7, the swing arm 26 has a second tapped portion 93 for mounting the sensor cable 91 (see FIG. 3) and a third tapped portion 97 for mounting the cover member 89 in the vicinity of the second tapped portion 93. A stay member 92 for fixing the sensor cable 91 is set on the second tapped portion 93 and fastened thereto by means of a screw 99. Further, the cover member 89 is set on the third tapped portion 97 and fastened thereto by means of a screw 88.

FIG. 8 is a cross section taken along the line 8-8 in FIG. 3. As shown in FIG. 8, the swing arm 26 has a second tapped portion 93 for mounting the sensor cable 91 (see FIG. 3) and a third tapped portion 97 for mounting the cover member 89 in the vicinity of the second tapped portion 93.

Referring to FIGS. 6 to 8, the swing arm 26 has the first tapped portions 87 for mounting the vehicle speed sensor 83, the second tapped portions 93 for mounting the sensor cable 91 (see FIG. 3), and the third tapped portions 97 for mounting the cover member 89 in the vicinity of the first tapped portions 87 or the second tapped portions 93. Accordingly, a mold for forming the swing arm 26 can be easily designed.

The first tapped portions 87 and the third tapped portion 97 are located in the vicinity of each other as shown in FIG. 6. The second tapped portion 93 and the other third tapped portion 97 are located in the vicinity of each other as shown in FIG. 7. Similarly, the other second tapped portion 93 and the other third tapped portion 97 are located in the vicinity of each other as shown in FIG. 8. Accordingly, in molding the swing arm 26, the fluidity of molten metal between the first tapped portions 87 and the corresponding third tapped portion 97 can be improved, and the fluidity of molten metal between each second tapped portion 93 and the corresponding third tapped portion 97 can also be improved. As a result, the molding quality of the swing arm 26 can be easily ensured. Also in working the swing arm 26, the amount of movement of a workpiece or a tool can be reduced to thereby improve a working efficiency.

The operation of this preferred embodiment will now be described.
Referring back to FIG. 3, the swing arm 26 has the recess 86 formed so as not to overlap the muffler 47 as viewed in side elevation of the vehicle, and the vehicle speed sensor 83 is provided in the recess 86. Accordingly, the width of the vehicle can be suppressed, and the vehicle speed sensor 83 can be spaced apart from the muffler 47. Since the vehicle speed sensor 83 is spaced apart from the muffler 47, the influence of the heat dissipated from the muffler 47 upon the vehicle speed sensor 83 can be suppressed.

Further, the vehicle speed sensor 83 is provided in the recess 86, and the recess 86 is covered with the cover member 89. Accordingly, foreign matter such as mud and sand hardly comes into direct contact with the vehicle speed sensor 83, so that the vehicle speed sensor 83 can be protected from foreign matter.
Moreover, since the influence of the heat dissipated from the muffler 47 upon the vehicle speed sensor 83 can be suppressed, the vehicle speed sensor 83 is not required to have heat resistance specifications, so that an increase in cost of the vehicle speed sensor 83 can be avoided.
The cover member 89 for covering the recess 86 may be omitted.

10: motorcycle, 11: body frame, 14: wheel, 26: swing arm, 26m: substantially central portion of the swing arm, 47: muffler, 60: boss portion, 65: axle supporting portion, 83: vehicle speed sensor, 84: center rotor, 86: recess, 87: first tapped portion, 89: cover member, 91: sensor cable, 93: second tapped portion, 97: third tapped portion

## Claims

1. A motorcycle (10) including a body frame (11), a swing arm (26) pivotably connected to said body frame (11) for rotatably supporting a wheel (14), a muffler (47) provided on one side of said swing arm (26) and mounted thereto so as to be vertically moved together, a center rotor (84) mounted on said wheel (14) so as to be rotated together, and a vehicle speed sensor (83) mounted on said swing arm (26) for detecting a wheel (14) speed in cooperation with said center rotor (84), wherein
said swing arm (26) has a recess (86), and wherein said vehicle speed sensor (83) is provided in said recess (86),
**characterized in that**
said recess (86) is formed so as not to overlap said muffler (47) as viewed in side elevation of said motorcycle (10), and
wherein said swing arm (26) has a boss portion (60) for mounting said muffler (47), and said recess (86) extends along the lower contour of said boss portion (60).

2. The motorcycle (10) according to claim 1, wherein said vehicle speed sensor (83) is located below said muffler (47).

3. The motorcycle (10) according to claim 1 or 2, wherein said recess (86) extends from near an axle supporting portion (65) of said swing arm (26) for supporting an axle of said wheel (14) to a substantially central portion of said swing arm (26).

4. The motorcycle (10) according to any one of claims 1 to 3, wherein a cover member (89) for covering said recess (86) is mounted on said swing arm (26).

5. The motorcycle (10) according to any of the preceding claims, wherein a sensor cable (91) extends from said vehicle speed sensor (83) along said swing arm, and a part of said sensor cable (91) is covered with said cover member (89).

6. The motorcycle (10) according to any of the preceding claims, wherein said swing arm (26) has a first tapped portion (87) for mounting said vehicle speed sensor (83), a second tapped portion (93) for mounting said sensor cable (91), and a third tapped portion (97) for mounting said cover member (89) in the vicinity of said first tapped portion (87) or said second tapped portion (93).

## Patentansprüche

1. Motorrad (10), welches einen Karosserierahmen (11), einen Schwingarm (26), welcher schwenkbar mit dem Karosserierahmen (11) verbunden ist, zum drehbaren Lagern eines Rads (14), einen Auspufftopf (47), welcher auf einer Seite des Schwingarms (26) vorgesehen ist, und welcher daran montiert ist, um so zusammen vertikal bewegt zu werden, einen Mittelrotor (84), welcher auf dem Rad (14) montiert ist, um so zusammen gedreht zu werden, und einen Fahrzeuggeschwindigkeitssensor (83) enthält, welcher auf dem Schwingarm (26) zum Detektieren einer Geschwindigkeit eines Rads (14) in Kooperation mit dem Mittelrotor (84) montiert ist, wobei
der Schwingarm (26) eine Ausnehmung (86) aufweist, und wobei der Fahrzeuggeschwindigkeitssensor (83) in der Ausnehmung (86) vorgesehen ist,
**dadurch gekennzeichnet, dass**
die Ausnehmung (86) derartig gebildet ist, um nicht mit dem Auspufftopf (47), in einer Seitenansicht des Motorrads (10) betrachtet, zu überlappen, und
wobei der Schwingarm (26) einen Ansatzabschnitt (60) zum Montieren des Auspufftopfes (47) aufweist, und wobei sich die Aussparung (86) entlang der unteren Kontur des Ansatzabschnitts (60) erstreckt.

2. Motorrad (10) gemäß Anspruch 1, wobei der Fahrzeuggeschwindigkeitssensor (83) unterhalb des Auspufftopfes (47) positioniert ist.

3. Motorrad (10) gemäß Anspruch 1 oder 2, wobei sich die Ausnehmung (86) von nahe eines Achsenträgerabschnitts (65) des Schwingarms (26) zum Lagern einer Achse des Rads (14) zu einem im Wesentlichen zentralen Abschnitt des Schwingarms (26) erstreckt.

4. Motorrad (10) gemäß irgendeinem der Ansprüche 1 bis 3, wobei ein Abdeckelement (89) zum Abdecken der Ausnehmung (86) auf dem Schwingarm (26) montiert ist.

5. Motorrad (10) gemäß irgendeinem der vorherigen Ansprüche, wobei sich ein Sensorkabel (91) von dem Fahrzeuggeschwindigkeitssensor (83) entlang des Schwingarms erstreckt, und wobei ein Teil des Sensorkabels (91) mit dem Abdeckelement (89) abgedeckt ist.

6. Motorrad (10) gemäß irgendeinem der vorherigen Ansprüche, wobei der Schwingarm (26) einen ersten angezapften Abschnitt (87) zum Montieren des Fahrzeuggeschwindigkeitssensors (83), einen zweiten angezapften Abschnitt (93) zum Montieren des Sensorkabels (91), und einen dritten angezapften Abschnitt (97) zum Montieren des Abdeckelements (89) in der Nähe des ersten angezapften Abschnitts (87) oder des zweiten angezapften Abschnitts (93) aufweist.

## Revendications

1. Motocycle (10), comprenant un châssis de carrosserie (11), un bras oscillant (26), relié par pivotement audit châssis de carrosserie (11), pour supporter en rotation une roue (14), un silencieux (47), prévu sur un côté dudit bras oscillant (26) et monté sur celui-ci de manière à être déplacé verticalement avec lui, un rotor central (84), monté sur ladite roue (14) de manière à être entraîné en rotation conjointement, et un capteur de vitesse de véhicule (83) monté sur ledit bras oscillant (26), pour détecter une vitesse de roue (14), en coopération avec ledit rotor central (84), dans lequel
ledit bras oscillant (26) présente une cavité (86), et dans lequel ledit capteur de vitesse de véhicule (83) est placé dans ladite cavité (86),
**caractérisé en ce que**
ladite cavité (86) est formée de manière à ne pas chevaucher ledit silencieux (47), lorsqu'on observe ledit motocycle (10) en vue en élévation de côté, et
dans lequel ledit bras oscillant (26) présente une partie en bossage (60), pour monter ledit silencieux (47), et ladite cavité (86) s'étend le long du contour inférieur de ladite partie en bossage (60).

2. Motocycle (10) selon la revendication 1, dans lequel ledit capteur de vitesse de véhicule (83) est placé au-dessous dudit silencieux (47).

3. Motocycle (10) selon la revendication 1 ou 2, dans lequel ladite cavité (86) s'étend depuis la proximité d'une partie de support d'axe (65) dudit bras oscillant (26), pour supporter un axe de ladite roue (14) en une partie sensiblement centrale dudit bras oscillant (26).

4. Motocycle (10) selon l'une quelconque des revendications 1 à 3, dans lequel un organe formant couvercle (89), pour couvrir ladite cavité (86), est monté sur ledit bras oscillant (26).

5. Motocycle (10) selon l'une quelconque des revendications précédentes, dans lequel un câble de capteur (91) s'étend, depuis ledit capteur de vitesse de véhicule (83), le long dudit bras oscillant, et une partie dudit câble de capteur (91) est couverte par ledit organe formant couvercle (89).

6. Motocycle (10) selon l'une quelconque des revendications précédentes, dans lequel ledit bras oscillant (26) comprend une première partie taraudée (87), pour le montage dudit capteur de vitesse de véhicule (83), une deuxième partie taraudée (93) pour le montage dudit câble de capteur (91), et une troisième partie taraudée (97), pour le montage dudit organe formant couvercle (89) à proximité de ladite première partie taraudée (87) ou de ladite deuxième partie taraudée (93).
